(19) 

Europäisches
Patentamt
European
Patent Office
Office européen
des brevets

(11) **EP 3 431 510 A1**

(12) **EUROPEAN PATENT APPLICATION**
published in accordance with Art. 153(4) EPC

(43) Date of publication:
**23.01.2019 Bulletin 2019/04**

(21) Application number: **17766535.3**

(22) Date of filing: **09.03.2017**

(51) Int Cl.:
*C08C 2/04* (2006.01)          *C08C 1/00* (2006.01)
*C08C 3/00* (2006.01)          *C08F 6/08* (2006.01)
*C08J 3/07* (2006.01)          *C08L 21/00* (2006.01)

(86) International application number:
**PCT/JP2017/009471**

(87) International publication number:
**WO 2017/159534 (21.09.2017 Gazette 2017/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **15.03.2016 JP 2016050507**

(71) Applicant: **Zeon Corporation
Tokyo 100-8246 (JP)**

(72) Inventors:
• **KODEMURA, Junji
Tokyo 100-8246 (JP)**
• **SATOH, Yoshitaka
Tokyo 100-8246 (JP)**

(74) Representative: **Adam, Holger
Kraus & Weisert
Patentanwälte PartGmbB
Thomas-Wimmer-Ring 15
80539 München (DE)**

(54) **METHOD FOR PRODUCING POLYMER LATEX**

(57)    There is provided a method for producing a polymer latex, including: a stirring step of adding water to a polymer solution obtained by dissolution of a synthetic rubber in an organic solvent, to allow water to be stirred in the polymer solution, thereby providing a water-stirred polymer solution (A); an aqueous phase removal step of removing an aqueous phase from the water-stirred polymer solution (A), thereby providing an aqueous phase-removed polymer solution (B); an emulsification step of mixing the aqueous phase-removed polymer solution (B) with an aqueous solution including a surfactant, for emulsification in water, thereby obtaining an emulsified liquid (C); a solvent removal step of removing an organic solvent in the emulsified liquid (C); and a concentration step of concentrating the emulsified liquid from which the organic solvent is removed (D).

EP 3 431 510 A1

## Description

TECHNICAL FIELD

The present invention relates to a method for producing a polymer latex that is high in solid content concentration, that is excellent in mechanical stability, and that can provide a dip molded article excellent in tensile strength, tensile elongation and tensile stress.

BACKGROUND ART

It has been conventionally known that a dip molded article for use in contact with the human body, such as a nipple, an air ball, a glove, a balloon and a sack, is obtained by dip molding of a latex composition containing a latex of natural rubber. A latex of natural rubber, however, contains a protein causing an allergy symptom in the human body, and thus is problematic in terms of use in a dip molded article that is in direct contact with the mucous membrane or organs of a living body. Therefore, studies about use of not a latex of natural rubber, but a latex of a synthetic rubber such as synthetic polyisoprene and/or a styrene-isoprene-styrene block copolymer have been increasingly made (Patent Document 1).

For example, Patent Document 1 discloses a method for producing a latex of synthetic polyisoprene by polymerizing isoprene by use of a Ziegler type polymerization catalyst made of trialkyl aluminum-titanium tetrachloride or an alkyllithium polymerization catalyst such as n-butyllithium or sec-butyllithium in an inert polymerization solvent to obtain a polymer solution of synthetic polyisoprene and emulsifying the polymer solution and thereafter removing an organic solvent.

RELATED ART

PATENT DOCUMENT

Patent Document 1: Japanese Patent Laid-Open No. 2012-62487

SUMMARY OF THE INVENTION

PROBLEM TO BE SOLVED BY THE INVENTION

On the other hand, a latex obtained by the technique of Patent Document 1 described above is not sufficient in mechanical stability as a latex, and therefore has the problem of not being sufficient in storage stability, and/or the problem of causing aggregation to occur to make an increase in solid content concentration impossible in the case where the centrifugation condition, specifically, the acceleration rate during centrifugation is increased for an enhancement in solid content concentration in concentration by centrifugation.

The present invention has been made in view of such circumstances, and an object thereof is to provide a polymer latex that is high in solid content concentration, that is excellent in mechanical stability, and that can provide a dip molded article excellent in tensile strength, tensile elongation and tensile stress.

MEANS FOR SOLVING THE PROBLEM

The present inventors have made intensive studies and thus have found that a latex of a synthetic rubber, produced by use of a polymerization catalyst as in the technique of Patent Document 1 described above, causes the problem of being insufficient in mechanical stability as a latex and/or the problem of making an increase in solid content concentration impossible, due to the influence of a polymerization catalyst residue.

On the contrary, the present inventors have made further studies in order to solve the above problems, and as a result, have found that the above problems can be solved by: adding water to a polymer solution obtained by dissolution of a synthetic rubber in an organic solvent, to allow water to be stirred in the polymer solution, and then removing an aqueous phase included in the polymer solution; leading to completion of the present invention.

That is, according to the present invention, there is provided a method for producing a polymer latex, including: a stirring step of adding water to a polymer solution obtained by dissolution of a synthetic rubber in an organic solvent, to allow water to be stirred in the polymer solution, thereby providing a water-stirred polymer solution (A); an aqueous phase removal step of removing an aqueous phase from the water-stirred polymer solution (A), thereby providing an aqueous phase-removed polymer solution (B); an emulsification step of mixing the aqueous phase-removed polymer solution (B) with an aqueous solution including a surfactant, for emulsification in water, thereby obtaining an emulsified liquid (C); a solvent removal step of removing an organic solvent in the emulsified liquid (C); and a concentration step of concentrating the emulsified liquid from which the organic solvent is removed (D).

It is preferable in the method for producing a polymer latex of the present invention that stirring of water in the polymer solution in the stirring step be performed in the state of a chelating agent and/or an oxidant being added.

It is preferable in the method for producing a polymer latex of the present invention that stirring of water in the polymer solution in the stirring step be performed with a shear force being applied.

It is preferable in the method for producing a polymer latex of the present invention that an amount of water used in the stirring step be 0.1 to 100 parts by weight based on 100 parts by weight of the polymer solution.

It is preferable in the method for producing a polymer latex of the present invention that stirring of water in the polymer solution in the stirring step be performed under a condition of a temperature of 25 to 100°C.

It is preferable in the method for producing a polymer latex of the present invention that the synthetic rubber be synthetic polyisoprene and/or a styrene-isoprene-styrene block copolymer.

It is preferable in the method for producing a polymer latex of the present invention that the polymer solution be a polymer solution obtained by dissolution, in an organic solvent, of the synthetic polyisoprene obtained by solution polymerization of a monomer including isoprene dissolved in an organic solvent, in the presence of a Ziegler type polymerization catalyst, and/or the styrene-isoprene-styrene block copolymer obtained by solution polymerization of a styrene-containing monomer and an isoprene-containing monomer dissolved in an organic solvent, in the presence of a Ziegler type polymerization catalyst.

In addition, according to the present invention, there is provided a method for producing a latex composition, including a step of adding a crosslinking agent to a polymer latex obtained by the production method.

Furthermore, according to the present invention, there is provided a method for producing a dip molded article, including a step of dip molding a latex composition obtained by the production method.

Furthermore, according to the present invention, there is provided a method for producing an adhesive layer formation substrate, including a step of forming an adhesive layer formed by use of a polymer latex obtained by the production method, on a substrate surface.

EFFECTS OF INVENTION

According to the present invention, there can be provided a polymer latex that is high in solid content concentration, that is excellent in mechanical stability, and that can provide a dip molded article excellent in tensile strength, tensile elongation and tensile stress, and a dip molded article that is obtained by use of such a polymer latex and that is excellent in tensile strength, tensile elongation and tensile stress.

DESCRIPTION OF EMBODIMENTS

The method for producing a polymer latex of the present invention includes:

a stirring step of adding water to a polymer solution obtained by dissolution of a synthetic rubber in an organic solvent, to allow water to be stirred in the polymer solution, thereby providing a water-stirred polymer solution (A);
an aqueous phase removal step of removing an aqueous phase from the water-stirred polymer solution (A), thereby providing an aqueous phase-removed polymer solution (B);
an emulsification step of mixing the aqueous phase-removed polymer solution (B) with an aqueous solution including a surfactant, for emulsification in water, thereby obtaining an emulsified liquid (C);
a solvent removal step of removing an organic solvent in the emulsified liquid (C); and
a concentration step of concentrating the emulsified liquid from which the organic solvent is removed (D).

According to the present invention, water can be added to a polymer solution obtained by dissolution of a synthetic rubber in an organic solvent, to allow water to be stirred in the polymer solution, and thereafter an aqueous phase can be removed from the polymer solution after stirring, thereby appropriately removing impurities included in the polymer solution, such as a polymerization catalyst residue. On the other hand, according to findings by the present inventors, if such impurities, in particular, a polymerization catalyst residue is included in large amounts, the following problem: when a polymer latex is formed, it is inferior in mechanical stability and thus inferior in storage stability; and/or the following problem: aggregation is caused to occur to make an increase in solid content concentration impossible in the case where the centrifugation condition, specifically, the acceleration rate during centrifugation is increased for an enhancement in solid content concentration in concentration by centrifugation; are/is caused.

On the contrary, according to the present invention, such impurities such as a polymerization catalyst residue can be appropriately removed, thereby providing a polymer latex high in solid content concentration and excellent in mechanical stability. In particular, according to the present invention, impurities included in a polymer solution, such as a polymerization catalyst residue can be appropriately removed, therefore emulsification of a synthetic rubber in emulsification of a synthetic rubber by use of such a polymer solution can be allowed to favorably progress without any inhibition due to impurities such as a polymerization catalyst, thereby causing no problem about aggregation or the like even at a high centrifugation condition, to consequently enable the solid content concentration to be increased and furthermore enable the resulting polymer latex to be excellent in mechanical stability. Additionally, according to the present invention, emulsification of a synthetic rubber can be allowed to favorably progress without any inhibition due to impurities such as a polymerization catalyst, thereby enabling a dip molded article obtained in dip molding to be excellent in tensile strength, tensile elongation and tensile stress.

The synthetic rubber for use in the present invention is not particularly limited, examples thereof include a synthetic rubber obtained by polymerization of a monomer by use of a polymerization catalyst such as a metal catalyst, and specifically, homopolymers or copolymers of conjugate diene monomers such as synthetic polybutadiene, synthetic polyisoprene and synthetic polychloroprene; copolymers of conjugate diene monomers and other monomers copolymerizable therewith, such as a styrenebutadiene copolymer, a styrene-isoprene copolymer, a styrene-isoprene-styrene block copolymer, an acrylonitrile-butadiene copolymer, an acrylonitrile-isoprene copolymer, an acrylonitrile-butadiene-isoprene copolymer and a butyl acrylate-butadiene copolymer; acrylate-type (co)polymers, and the like can be exemplified, and these may be used singly or in combinations of a plurality of kinds. In the present invention, among these synthetic rubbers, synthetic polyisoprene and/or a styrene-isoprene-styrene block copolymer are/is preferable because of being excellent in tensile strength and elongation when formed into a film molded article such as a dip molded article.

Hereinafter, a case where the synthetic rubber for use in the present invention is synthetic polyisoprene and/or a styrene-isoprene-styrene block copolymer is exemplified and described. It is noted that the polymer latex according to the present invention is not intended to be limited to such a latex of synthetic polyisoprene and/or a styrene-isoprene-styrene block copolymer at all.

Polymer solution of synthetic polyisoprene

First, a case where the synthetic rubber is synthetic polyisoprene is described.

With respect to the polymer solution of synthetic polyisoprene, the synthetic polyisoprene included may be a homopolymer of isoprene or may be obtained by copolymerization with other ethylenically unsaturated monomer copolymerizable with isoprene. The content of the isoprene unit in the synthetic polyisoprene is preferably 70% by weight or more, more preferably 90% by weight or more, further preferably 95% by weight or more, particularly preferably 100% by weight (homopolymer of isoprene) based on the total monomer unit from the viewpoint that a flexible dip molded article excellent in tensile strength is easily obtained.

Examples of such other ethylenically unsaturated monomer copolymerizable with isoprene include conjugated diene monomers other than isoprene, such as butadiene, chloroprene and 1,3-pentadiene; ethylenically unsaturated nitrile monomers such as acrylonitrile, methacrylonitrile, fumaronitrile and $\alpha$-chloroacrylonitrile; vinyl aromatic monomers such as styrene and alkylstyrene; and ethylenically unsaturated carboxylic acid ester monomers such as methyl (meth)acrylate (which means "methyl acrylate and/or methyl methacrylate"; hereinafter, much the same is true on ethyl (meth)acrylate and the like.), ethyl (meth)acrylate, butyl (meth)acrylate and 2-ethylhexyl (meth)acrylate. Such other ethylenically unsaturated monomers copolymerizable with isoprene may be used singly or in combinations of two or more kinds thereof.

The polymer solution of synthetic polyisoprene, for use in the present invention, can be obtained by, for example, solution polymerization of a monomer including isoprene and other ethylenically unsaturated monomer copolymerizable therewith, if necessary used, by use of a Ziegler type polymerization catalyst made of trialkyl aluminum-titanium tetrachloride or an alkyllithium polymerization catalyst such as n-butyllithium or sec-butyllithium in an organic solvent. In particular, according to the present invention, the above-mentioned Ziegler type polymerization catalyst or alkyllithium polymerization catalyst can be desirably used to perform polymerization, thereby allowing the polymerization conversion to be preferably 97% by weight or more, more preferably 99% by weight or more, to result in a reduction in the amount of the remaining monomer, thereby suppressing the amount of the remaining monomer in the resulting emulsified liquid even in the case of direct emulsification without any steps such as coagulation and re-dissolution for removal of the remaining monomer.

In the present invention, even in the case of solution polymerization of a monomer in the presence of a polymerization catalyst for obtaining a polymer solution of synthetic polyisoprene, the resulting polymer solution can be mixed and stirred with water and thereafter an aqueous phase included in the polymer solution where water is stirred can be removed to thereby efficiently remove the polymerization catalyst remaining in the polymer solution, as described below. Thus, not only the polymer latex can be allowed to be high in solid content concentration and excellent in mechanical stability, but also a dip molded article obtained by use of the polymer latex can be enhanced in tensile strength, tensile elongation and tensile stress.

The amount of the polymerization catalyst used is preferably 0.0070 to 0.085 parts by weight, more preferably 0.0076 to 0.056 parts by weight, further preferably 0.0084 to 0.042 parts by weight based on 100 parts by weight of the monomer for use in polymerization, from the viewpoint that a polymer latex can be produced at a high productivity.

The organic solvent may be any organic solvent that is inert to the polymerization reaction, and examples thereof include aromatic hydrocarbon solvents such as benzene, toluene and xylene; alicyclic hydrocarbon solvents such as cyclopentane, cyclopentene, cyclohexane and cyclohexene; aliphatic hydrocarbon solvents such as pentane, hexane and heptane; and halogenated hydrocarbon solvents such as methylene chloride, chloroform and ethylene dichloride. Among them, alicyclic hydrocarbon solvents or aliphatic hydrocarbon solvents are preferable, and n-hexane and cyclohexane are particularly preferable. The amount of the organic solvent used is preferably 250 to 2000 parts by weight, more preferably 400 to 1250 parts by weight based on 100 parts by weight of the monomer for use in polymerization.

The polymerization temperature in solution polymerization of the monomer including isoprene and other ethylenically unsaturated monomer copolymerizable therewith, if necessary used, is preferably 40 to 80°C, more preferably 45 to 75°C from the viewpoint that a polymer latex can be produced at a high productivity.

The isoprene unit in the synthetic polyisoprene is present in the form of four types including a cis bond unit, a trans bond unit, a 1,2-vinyl bond unit and a 3,4-vinyl bond unit depending on the binding state of isoprene. The content rate of the cis bond unit in the isoprene unit included in the synthetic polyisoprene is preferably 70% by weight or more, more preferably 72% by weight or more, further preferably 75% by weight or more based on the total isoprene unit from the viewpoint of an enhancement in tensile strength of the resulting dip molded article.

The weight average molecular weight (Mw) of the synthetic polyisoprene is preferably 100,000 to 5,000,000, more preferably 300,000 to 3,000,000, further preferably 500,000 to 2,000,000 in terms of standard polystyrene by gel permeation chromatography analysis. The weight average molecular weight of the synthetic polyisoprene is in the above range, thereby resulting in a tendency to not only enhance the tensile strength of a dip molded article, but also easily produce a synthetic polyisoprene latex.

Polymer solution of styrene-isoprene-styrene block copolymer

Next, a case where the synthetic rubber for use in the present invention is a styrene-isoprene-styrene block copolymer will be described.

In the polymer solution of styrene-isoprene-styrene block copolymer, the styrene-isoprene-styrene block copolymer is a block copolymer of styrene and isoprene, and the content ratio of the styrene unit and the isoprene unit in the styrene-isoprene-styrene block copolymer is usually in the range of 1:99 to 90:10, preferably 3:97 to 70:30, more preferably 5:95 to 50:50, further preferably 10:90 to 30:70 as the weight ratio of "styrene unit : isoprene unit".

In the polymer solution of styrene-isoprene-styrene block copolymer in the present invention, the styrene-isoprene-styrene block copolymer preferably has a molecular weight distribution (Mw/Mn) of 1.0 to 2.6, more preferably 1.0 to 2.4, further preferably 1.0 to 2.2. The molecular weight distribution (Mw/Mn) can be in the above range, thereby properly enhancing the tensile strength of the resulting dip molded article while suppressing an increase in the viscosity of the polymer solution obtained by dissolution of the styrene-isoprene-styrene block copolymer in the organic solvent. On the other hand, if the molecular weight distribution (Mw/Mn) is too large, the resulting dip molded article may be inferior in tensile strength.

The polymer solution of styrene-isoprene-styrene block copolymer, for use in the present invention, can be obtained by, for example, solution polymerization of a styrene-containing monomer and an isoprene-containing monomer by use of a Ziegler type polymerization catalyst made of trialkyl aluminum-titanium tetrachloride or an alkyllithium polymerization catalyst such as n-butyllithium or sec-butyllithium in an organic solvent. In particular, according to the present invention, the above-mentioned Ziegler type polymerization catalyst or alkyllithium polymerization catalyst can be desirably used to perform polymerization, thereby allowing the polymerization conversion to be preferably 97% by weight or more, more preferably 99% by weight or more, to result in a reduction in the amount of the remaining monomer, thereby suppressing the amount of the remaining monomer in the resulting emulsified liquid even in the case of direct emulsification without any steps such as coagulation and re-dissolution for removal of the remaining monomer.

The amount of the polymerization catalyst used is preferably 0.030 to 0.34 parts by weight, more preferably 0.038 to 0.24 parts by weight, further preferably 0.044 to 0.17 parts by weight based on 100 parts by weight of the monomer for use in polymerization, from the viewpoint that a polymer latex can be produced at a high productivity.

The organic solvent may be any organic solvent that is inert to the polymerization reaction, and, for example, the above organic solvent can be used. The amount of the organic solvent used is preferably 75 to 570 parts by weight, more preferably 80 to 400 parts by weight based on 100 parts by weight of the monomer for use in polymerization.

The polymerization temperature in solution polymerization of the styrene-containing monomer and the isoprene-containing monomer is preferably 35 to 80°C, more preferably 40 to 75°C from the viewpoint that a polymer latex can be produced at a high productivity.

The weight average molecular weight (Mw) of the styrene-isoprene-styrene block copolymer is preferably 50,000 to 500,000, more preferably 70,000 to 400,000, further preferably 100,000 to 350,000 in terms of standard polystyrene by gel permeation chromatography analysis. The weight average molecular weight of the styrene-isoprene-styrene block copolymer is in the above range, thereby resulting in a tendency to not only enhance the tensile strength of a dip molded article, but also easily produce a synthetic polyisoprene latex.

Stirring step

The stirring step in the production method of the present invention is a step of adding water to the above-mentioned polymer solution obtained by dissolution of a synthetic rubber in an organic solvent (for example, the above-mentioned polymer solution of synthetic polyisoprene and/or a styrene-isoprene-styrene block copolymer), to allow water to be stirred in the polymer solution, thereby providing a water-stirred polymer solution (A).

In the present invention, in the stirring step, water can be stirred in the polymer solution, and thus brought into contact with the polymer solution by stirring, to thereby allow impurities included in the polymer solution, such as a polymerization catalyst, to be transferred (dissolved) from the polymer solution to water (aqueous phase). Thereafter, the aqueous phase can be removed from the water-stirred polymer solution (A) obtained by stirring, in an aqueous phase removal step described below, thereby allowing impurities such as a polymerization catalyst remaining in the polymer solution to be removed.

According to the present invention, impurities included in the polymer solution can be removed together with the aqueous phase, thereby efficiently removing, in particular, the residue of a polymerization catalyst used for polymerization, as impurities, for example, the residue of a Ziegler type polymerization catalyst made of trialkyl aluminum-titanium tetrachloride or an alkyllithium polymerization catalyst such as n-butyllithium or sec-butyllithium used as the polymerization catalyst, inter alia, particularly efficiently removing the residue of a Ziegler type polymerization catalyst.

The amount of water used in the stirring step is preferably 0.1 to 100 parts by weight, more preferably 0.5 to 50 parts by weight, further preferably 1 to 20 parts by weight based on 100 parts by weight of the polymer solution. Examples of the type of water used include hard water, soft water, ion-exchange water, distilled water and zeolite water, and soft water, ion-exchange water and distilled water are preferable from the viewpoint of being capable of efficiently transferring (dissolving) impurities included in the polymer solution to (in) the aqueous phase.

The solid content concentration of the polymer solution for use in the present invention is preferably 1 to 50% by weight, more preferably 5 to 45% by weight, further preferably 10 to 40% by weight, particularly preferably 15 to 35% by weight. The solid content concentration of the polymer solution can be in the above range, thereby allowing the polymer latex to satisfy production efficiency and stability during production, in a well-balanced manner. That is, while there is the following tendency: as the solid content concentration of the polymer solution is higher, the amount of the polymer latex produced per unit time (production efficiency) is enhanced, and on the other hand, as the solid content concentration of the polymer solution is lower, the stability during production of the polymer latex is enhanced; the solid content concentration of the polymer solution can be in the above range, thereby allowing the polymer latex to satisfy production efficiency and stability during production, in a well-balanced manner.

Herein, the solid content concentration of the polymer solution before the polymer solution is mixed with water may also be adjusted by addition of an organic solvent after production of the polymer solution as described above.

In the present invention, as the polymer solution, a polymer solution obtained by polymerization of a monomer constituting the polymer in an organic solvent may be used as it is, or one obtained by coagulating the polymer from the polymer solution once and dissolving again the polymer coagulated, in an organic solvent, may be used.

Examples of the method for stirring water in the polymer solution include, but are not particularly limited, a method including adding water to the polymer solution in a tank where production of the above-mentioned polymer solution is performed (a tank where the polymerization reaction is performed, or a tank where dissolution of the polymer is performed), and stirring them in the tank according to a known procedure (for example, a procedure for stirring by rotation of a stirrer such as a rod, a plate, an agitator or a propeller), and a method including performing such stirring by introduction into a mixing apparatus outside the tank, and a method for stirring by use of a mixing apparatus outside the tank is preferable and a method including performing such stirring by continuously repeatedly feeding the polymer solution from the tank where production of the polymer solution is performed, to a stirring apparatus outside the tank, is particularly preferable from the viewpoint that water can be stirred in the polymer solution to thereby effectively remove impurities such as a polymerization catalyst.

The mixing apparatus outside the tank is not particularly limited, for example, a line mixer, a pulverizing pump or an emulsifying machine can be used without any particular limitation. An apparatus where stirring can be made with a shear force being applied is preferable and specifically a pulverizing pump or a sine pump is preferable from the viewpoint that impurities included in the polymer solution, such as a polymerization catalyst, can be efficiently transferred (dissolved) to (in) the aqueous phase.

When the polymer is dissolved in the above-mentioned solvent to prepare the polymer solution, the mixing apparatus outside the tank is more preferably used also in a dissolution step because a decrease in dissolution time is achieved.

The temperature in stirring of water in the polymer solution is preferably 25 to 100°C, more preferably 30 to 80°C, further preferably 35 to 70°C. The temperature condition in stirring of water in the polymer solution can be in the above range, thereby more efficiently transferring (dissolving) impurities included in the polymer solution, such as a polymerization catalyst, to (in) the aqueous phase.

Other conditions (stirring time, stirring rate, flow rate, and the like) in stirring of water in the polymer solution are not particularly limited, and may be appropriately set depending on the amount and the solid content concentration of the polymer solution, the type of the rubber component included in the polymer solution, the type of impurities included in the polymer solution, and the like.

When water is stirred in the polymer solution, stirring is preferably performed in the state of a chelating agent and/or an oxidant being added in advance, from the viewpoint that impurities included in the polymer solution, such as a polymerization catalyst, can be efficiently transferred (dissolved) to (in) the aqueous phase.

Examples of the chelating agent include, but are not particularly limited, an aminocarboxylic acid-based chelating compound, a phosphonic acid-based chelating compound, gluconic acid, citric acid, malic acid, and tartaric acid, and an aminocarboxylic acid-based chelating compound having an amino structure is preferable because of being high in the effect of removing impurities included in the polymer solution, such as a polymerization catalyst. Such chelating agents may be used singly or in combinations of two or more kinds thereof.

Examples of the aminocarboxylic acid-based chelating compound include ethylenediaminetetraacetic acid (EDTA), nitrilotriacetic acid (NTA), trans-1,2-diaminocyclohexanetetraacetic acid (CyDTA), diethylenetriaminepentaacetic acid (DTPA), triethylene-tetraminehexaacetic acid, bis-(aminoethyl)glycol ether-N,N,N',N'-tetraacetic acid (EGTA), N-(2-hydroxyethyl)ethylenediamine-N,N',N'-triacetic acid (HEDTA) and dihydroxyethyl glycine (DHEG). In particular, a more preferable aminocarboxylic acid-based chelating compound is one having a larger number of amine structures (namely, preferably in the order of monoamine < diamine < triamine < tetraamine) because of being higher in the effect of removing impurities included in the polymer solution.

Examples of the phosphonic acid-based chelating compound include 1-hydroxyethane-1,1,-diphosphonic acid (HEDP).

The amount of the chelating agent added is preferably 0.001 to 5 parts by weight, more preferably 0.005 to 1 part by weight, further preferably 0.01 to 0.5 parts by weight based on 100 parts by weight of the rubber component included in the polymer solution.

The pH of an aqueous chelating agent solution to be added to the polymer solution is usually 1 to 12, preferably 1.5 to 7, more preferably 2 to 6, further preferably 2 to 4.

Examples of the oxidant include, but are not particularly limited, hydrogen peroxide, aliphatic percarboxylic acid and organic peroxide.

The amount of the oxidant added is preferably 0.001 to 5 parts by weight, more preferably 0.005 to 1 parts by weight, further preferably 0.01 to 0.5 parts by weight based on 100 parts by weight of the rubber component included in the polymer solution.

When both the chelating agent and the oxidant are added, the total amount of the chelating agent and the oxidant added is preferably 0.001 to 10 parts by weight, more preferably 0.005 to 5 parts by weight, further preferably 0.01 to 1 part by weight based on 100 parts by weight of the rubber component included in the polymer solution.

Aqueous phase removal step

The aqueous phase removal step in the production method of the present invention is a step of removing an aqueous phase from the water-stirred polymer solution (A) obtained in the stirring step described above, thereby providing an aqueous phase-removed polymer solution (B).

Examples of the method for removing the aqueous phase from the water-stirred polymer solution (A) include, but are not particularly limited, a method including leaving the water-stirred polymer solution (A) to stand, thereby separating it to an organic layer and an aqueous layer, and thereafter removing the aqueous layer (aqueous phase) separated, and a method including performing centrifugation, thereby separating the water-stirred polymer solution (A) to an organic layer and an aqueous layer, and thereafter removing the aqueous layer (aqueous phase) separated.

When the aqueous phase is removed from the water-stirred polymer solution (A), the removal rate of the aqueous phase is preferably 50% by weight or more, more preferably 70% by weight or more, further preferably 80% by weight or more, particularly preferably 90% by weight or more based on the amount of water added in the mixing/stirring step. The removal rate of the aqueous phase can be in the above range, thereby more efficiently removing impurities included in the polymer solution, such as a polymerization catalyst.

In the present invention, the aqueous phase may be removed from the water-stirred polymer solution (A) according to the above-mentioned method and thereafter the remaining aqueous phase may be further removed by washing with an alcohol or water, from the viewpoint that impurities included in the polymer solution, such as a polymerization catalyst, can be more efficiently removed.

According to the present invention, impurities included in the polymer solution, such as a polymerization catalyst, can be efficiently removed in the stirring step and the aqueous phase removal step described above, and thus when a synthetic rubber is emulsified, the emulsification of the synthetic rubber can be allowed to favorably progress in an emulsification step described below without any inhibition due to impurities such as a polymerization catalyst, thereby consequently allowing the resulting polymer latex to be high in solid content concentration and excellent in mechanical stability and furthermore allowing the resulting dip molded article to be excellent in tensile strength, tensile elongation and tensile stress.

Emulsification step

The emulsification step in the production method of the present invention is a step of emulsifying the aqueous phase-removed polymer solution (B) obtained in the aqueous phase removal step, in water in the presence of a surfactant, thereby obtaining an emulsified liquid (C).

The surfactant for use in the emulsification step in the production method of the present invention is not particularly limited, and an anionic surfactant can be preferably used. Examples of the anionic surfactant include fatty acid salts such as sodium laurate, potassium myristate, sodium palmitate, potassium oleate, sodium linolenate and sodium rosinate; alkylbenzenesulfonic acid salts such as sodium dodecylbenzenesulfonate, potassium dodecylbenzenesulfonate, sodium decylbenzenesulfonate, potassium decylbenzenesulfonate, sodium cetylbenzenesulfonate and potassium cetylbenzenesulfonate; alkylsulfosuccinic acid salts such as sodium di(2-ethylhexyl)sulfosuccinate, potassium di(2-ethylhexyl)sulfosuccinate and sodium dioctylsulfosuccinate; alkylsulfuric acid ester salts such as sodium lauryl sulfate and potassium lauryl sulfate; polyoxyethylene alkyl ether sulfuric acid ester salts such as sodium polyoxyethylene lauryl ether sulfate and potassium polyoxyethylene lauryl ether sulfate; and monoalkyl phosphoric acid salts such as sodium lauryl phosphate and potassium lauryl phosphate.

Among these anionic surfactants, fatty acid salts, alkylbenzenesulfonic acid salts, alkylsulfosuccinic acid salts, alkylsulfuric acid ester salts and polyoxyethylene alkyl ether sulfuric acid salts are preferable, and fatty acid salts and alkylbenzenesulfonic acid salts are particularly preferable.

It is preferable to use at least one selected from the group consisting of alkylbenzenesulfonic acid salts, alkylsulfosuccinic acid salts, alkylsulfuric acid ester salts and polyoxyethylene alkyl ether sulfuric acid ester salts, and any fatty acid salt, and it is particularly preferable to use any alkylbenzenesulfonic acid salt and any fatty acid salt because the occurrence of an aggregate in production of a polymer latex is suppressed. Preferable fatty acid salts are sodium rosinate and potassium rosinate, and preferable alkylbenzenesulfonic acid salts are sodium dodecylbenzenesulfonate and potassium dodecylbenzenesulfonate. Such surfactants may be used singly or in combinations of two or more kinds thereof.

Furthermore, a surfactant other than the anionic surfactant may be used in combination in the production method of the present invention, and examples of such a surfactant other than the anionic surfactant include copolymerizable surfactants such as $\alpha,\beta$-unsaturated carboxylic acid sulfoester, $\alpha,\beta$-unsaturated carboxylic acid sulfate ester and sulfoalkyl aryl ether.

Any nonionic surfactant such as polyoxyethylene alkyl ether, polyoxyethylene alkylphenol ether, polyoxyethylene alkyl ester or polyoxyethylene sorbitan alkyl ester may be used as long as such a nonionic surfactant does not inhibit coagulation by a coagulating agent for use in dip molding.

The amount of the surfactant used is preferably 0.1 to 50 parts by weight, more preferably 0.5 to 40 parts by weight, further preferably 5 to 30 parts by weight based on 100 parts by weight in total of the synthetic rubber included in the polymer solution. When two or more kinds of such surfactants are used, the total amount of such surfactants used is preferably in the above range. If the amount of the surfactant used is too small, an aggregate may occur in a large amount during emulsification, and on the contrary, if the amount is too large, foaming can easily occur to cause the occurrence of a pinhole in the resulting dip molded article.

The amount of water used in the emulsification step in the production method of the present invention is preferably 10 to 1,000 parts by weight, more preferably 30 to 500 parts by weight, most preferably 50 to 100 based on 100 parts by weight of the polymer solution of a synthetic rubber. Examples of the types of water used include hard water, soft water, ion-exchange water, distilled water and zeolite water, and soft water, ion-exchange water and distilled water are preferable.

When the aqueous phase-removed polymer solution (B) is emulsified in water in the presence of the surfactant, an emulsifying apparatus commonly commercially available as an emulsifying machine or a dispersing machine can be used without any particular limitation. The method for adding the surfactant to the polymer solution of a synthetic rubber is not particularly limited, and the surfactant may be added to one or both of water and the polymer solution of a synthetic rubber in advance, or may be added to the emulsified liquid (C) while an emulsification operation is performed, collectively or in portions.

As the emulsifying apparatus, for example, a batch type emulsifying machine such as trade name "Homogenizer" (manufactured by IKA), trade name "Polytron" (manufactured by Kinematica) or trade name "TK Auto Homomixer" (manufactured by Primix Corporation); a continuous emulsifying machine such as trade name "TK-pipeline homomixer" (manufactured by Primix Corporation), trade name "Colloid Mill" (manufactured by Shinko Pantech Co., Ltd.), trade name "Slusher" (manufactured by Nippon Coke & Engineering. Co., Ltd.), trade name "Trigonal wet fine pulverizer" (manufactured by Mitsui Miike Machinery Co., Ltd.), trade name "Cavirton" (manufactured by Eurotech Co., Ltd.), trade name "Milder" (manufactured by Pacific Machinery & Engineering Co., Ltd.) or trade name "Fine flow mill" (manufactured by Pacific Machinery & Engineering Co., Ltd.); a highpressure emulsifying machine such as trade name "Microfluidizer" (manufactured by Mizuho Industrial Co., Ltd.), trade name "Nanomizer" (manufactured by Nanomizer Inc.) or trade name "APV Gaulin" (manufactured by APV Gaulin Inc.); a membrane emulsifying machine such as trade name "Membrane emulsifying machine" (manufactured by Reica Co., Ltd.); a vibration type emulsifying machine such as trade name "Vibromixer" (manufactured by Reica Co., Ltd.); or an ultrasonic emulsifying machine such as trade name "Ultrasonic homogenizer" (manufactured by Branson Ultrasonics, Emerson Japan, Ltd.); can be used. Herein, the emulsifying operation conditions by the emulsifying apparatus are not particularly limited, and the treatment temperature and the treatment time may be appropriately selected so that a desired dispersing state is achieved.

Solvent removal step

The solvent removal step in the production method of the present invention is a step of removing the organic solvent from the emulsified liquid (C) obtained in the emulsification step. The method for removing the organic solvent from the emulsified liquid (C) is preferably a method which enables the content of the organic solvent (preferably aliphatic hydrocarbon solvent) in the emulsified liquid (C) to be 500 ppm by weight or less, a method of distillation under reduced pressure, atmospheric distillation, steam distillation, centrifugation or the like can be adopted, and among them, distillation under reduced pressure is preferable from the viewpoint that the organic solvent can be properly and effectively removed.

To the emulsified liquid (D) from which the organic solvent is removed may be compounded additive(s) commonly compounded in the latex field, such as a pH adjuster, a defoamer, a preservative, a chelating agent, an oxygen scavenger, a dispersing agent and an antioxidant.

Examples of the pH adjuster include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; and organic amine compounds such as trimethylamine and triethanolamine, and alkali metal hydroxide or ammonia is preferable.

Concentration step

The concentration step in the production method of the present invention is a step of concentrating the emulsified liquid from which the organic solvent is removed in the solvent removal step (D), thereby obtaining a polymer latex.

Examples of the method for concentration in the concentration step include various concentration operations such as distillation under reduced pressure, atmospheric distillation, centrifugation, and membrane concentration, and centrifugation is preferably performed from the viewpoint that the remaining amount of the surfactant in the polymer latex can be adjusted.

When the polymer latex is subjected to a centrifuge, a pH adjuster is preferably added to adjust the pH of the polymer latex to 7 or more, more preferably 9 or more for an enhancement in the mechanical stability of the polymer latex. As the pH adjuster, alkali metal hydroxide such as sodium hydroxide or potassium hydroxide, or ammonia is preferable.

The solid content concentration of the emulsified liquid (C) (the emulsified liquid (C) before centrifugation) for use in centrifugation is preferably 1 to 40% by weight, more preferably 5 to 35% by weight, further preferably 5 to 20% by weight. The solid content concentration of the emulsified liquid (C) before centrifugation is preferably in the above range because centrifugation can be properly performed. Herein, when centrifugation is performed, the emulsified liquid (C) which undergoes the solvent removal step may be used as it is, or the emulsified liquid may be used after the solid content concentration is adjusted.

The centrifugal acceleration in centrifugation is preferably 3000 to 8000 G, more preferably 4000 to 6000 G, further preferably 4500 to 5500 G from the viewpoint that the solid content concentration of the polymer latex can be preferably 60% by weight or more, more preferably 60 to 70% by weight, further preferably 63 to 68% by weight. In the present invention, impurities included in the polymer solution, such as a polymerization catalyst, can be appropriately removed in the stirring step and the aqueous phase removal step, and thus the emulsified liquid (C) can be inhibited from being coagulated in centrifugation even in centrifugation at the above-mentioned centrifugal acceleration, thereby allowing for centrifugation at a relatively high centrifugal acceleration to thereby obtain the polymer latex for a shorter time in a high solid content concentration. Additionally, the centrifugal acceleration in centrifugation can be higher, thus a light liquid and a heavy liquid each including the polymer latex can be more properly separated (namely, the amount of the polymer latex incorporated into the heavy liquid can be reduced), and therefore the amount of the polymer latex disposed together with the heavy liquid in disposing of the heavy liquid can be reduced.

When the centrifugation is performed by use of a continuous centrifuge, the flow rate for feeding the emulsified liquid to the centrifuge is preferably 500 to 1700kg/hr and the back pressure (gauge pressure) of the centrifuge is preferably 0.03 to 1.6 MPa.

The total content of the surfactant in the polymer latex produced by the production method of the present invention is preferably 5 parts by weight or less, more preferably 3 parts by weight or less, further preferably 0.1 to 3 parts by weight based on 100 parts by weight of the rubber component included in the polymer latex. The total content of the surfactant can be in the above range, thereby not only enhancing the productivity and mechanical stability of the polymer latex, but also enhancing the tensile strength, tensile elongation and tensile stress of the resulting dip molded article by use of the polymer latex.

Latex composition

The latex composition of the present invention is obtained by adding a crosslinking agent to the polymer latex obtained by the production method of the present invention.

Examples of the crosslinking agent include sulfur such as powdered sulfur, sublimed sulfur, precipitated sulfur, colloidal sulfur, surface-treated sulfur and insoluble sulfur; and sulfur-containing compounds such as sulfur chloride, sulfur dichloride, morpholine-disulfide, alkylphenol-disulfide, caprolactam-disulfide, phosphorus-containing polysulfide, polymeric polysulfide and 2-(4'-morpholinodithio)benzothiazole. Among them, sulfur can be preferably used. Such crosslinking agents can be used singly or in combinations of two or more kinds thereof.

The content of the crosslinking agent is not particularly limited, and is preferably 0.1 to 10 parts by weight, more preferably 0.2 to 3 parts by weight based on 100 parts by weight of the rubber component included in the polymer latex. The content of the crosslinking agent can be in the above range, thereby more enhancing the tensile strength of the resulting dip molded article.

The latex composition of the present invention preferably further contains a crosslinking accelerator.

A crosslinking accelerator usually used in dip molding can be used as the crosslinking accelerator, and examples include dithiocarbamic acids such as diethyldithiocarbamic acid, dibutyldithiocarbamic acid, di-2-ethylhexyldithiocarbamic acid, dicyclohexyldithiocarbamic acid, diphenyldithiocarbamic acid and dibenzyldithiocarbamic acid, and zinc salts thereof; and 2-mercaptobenzothiazole, zinc 2-mercaptobenzothiazole, 2-mercaptothiazoline, dibenzothiazyl-disulfide, 2-(2,4-dinitrophenylthio)benzothiazole, 2-(N,N-diethylthio-carbarylthio)benzothiazole, 2-(2,6-dimethyl-4-morpholinothio)benzothiazole, 2-(4'-morpholino-dithio)benzothiazole, 4-morpholinyl-2-benzothiazyl-disulfide and 1,3-bis(2-benzothiazyl-mercaptomethyl)urea, and zinc diethyldithiocarbamate, zinc 2-dibutyldithiocarbamate and zinc 2-mercaptobenzothiazole are preferable. Such crosslinking accelerators can be used singly or in combinations of two or more kinds thereof.

The content of the crosslinking promoter is preferably 0.05 to 5 parts by weight, more preferably 0.1 to 2 parts by weight based on 100 parts by weight of the rubber component included in the polymer latex. The content of the crosslinking promoter can be in the above range, thereby more enhancing the tensile strength of the resulting dip molded article.

The latex composition of the present invention preferably further contains zinc oxide.

The content of the zinc oxide is not particularly limited, and is preferably 0.1 to 5 parts by weight, more preferably 0.2 to 2 parts by weight based on 100 parts by weight of the synthetic rubber. The content of the zinc oxide can be in the above range, thereby more enhancing the tensile strength of the resulting dip molded article, with emulsification stability being favorable.

To the latex composition of the present invention can be, if necessary, compounded a compounding agent, for example, an antioxidant; a dispersing agent; a reinforcement agent such as carbon black, silica or talc; a filler such as calcium carbonate or clay; an ultraviolet absorber; or a plasticizer.

Examples of the antioxidant include phenol-based antioxidants containing no sulfur atom, such as 2,6-di-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl)propionate, styrenated phenol, 2,2'-methylene-bis(6-$\alpha$-methyl-benzyl-p-cresol), 4,4'-methylenebis(2,6-dit-butylphenol), 2,2'-methylene-bis(4-methyl-6-t-butylphenol), alkylated bisphenol, and a butylated reaction product of p-cresol and dicyclopentadiene; thiobisphenol-based antioxidants such as 2,2'-thiobis-(4-methyl-6-t-butylphenol), 4,4'-thiobis-(6-t-butyl-o-cresol) and 2,6-dit-butyl-4-(4,6-bis(octylthio)-1,3,5-triazine-2-ylamino)phenol; phosphorous acid ester-based antioxidants such as tris(nonylphenyl)phosphite, diphenylisodecyl phosphite and tetraphenyl dipropylene glycol-diphosphite; sulfur ester-based antioxidants such as dilauryl thiodipropionate; amine-based antioxidants such as phenyl-$\alpha$-naphthylamine, phenyl-p-naphthylamine, p-(p-toluenesulfonylamide)-diphenylamine, 4,4'-($\alpha,\alpha$-dimethylbenzyl)diphenylamine, N,N-diphenyl-p-phenylenediamine, N-isopropyl-N'-phenyl-p-phenylenediamine and a butylaldehyde-aniline condensate; quinoline-based antioxidants such as 6-ethoxy-2,2,4-trimethyl-1,2-dihydroquinone; and hydroquinone-based antioxidants such as 2,5-di-(t-amyl)hydroquinone. Such antioxidants can be used singly or in combinations of two or more kinds thereof.

The content of the antioxidant is preferably 0.05 to 10 parts by weight, more preferably 0.1 to 5 parts by weight based on 100 parts by weight of the rubber component included in the polymer latex.

Examples of the method for preparing the latex composition of the present invention include, but are not particularly limited, a method including mixing the crosslinking agent and various compounding agents, if necessary compounded, with a polymer latex containing a synthetic rubber by use of a dispersing machine such as a ball mill, a kneader or a disper, and a method including preparing an aqueous dispersion liquid of compounding components other than a polymer latex containing a synthetic rubber, by use of the dispersing machine, and thereafter mixing the aqueous dispersion liquid with the polymer latex containing a synthetic rubber.

The pH of the latex composition of the present invention is preferably 7 or more, more preferably in the range of 7 to 13, further preferably in the range of 8 to 12. The solid content concentration of the latex composition is preferably in the range of 15 to 65% by weight.

The latex composition of the present invention is preferably subjected to aging (pre-crosslinking) before dip molding from the viewpoint that mechanical properties of the resulting dip molded article are more enhanced. The pre-crosslinking time is not particularly limited and is preferably 1 to 14 days, more preferably 1 to 7 days, depending on the pre-crosslinking temperature. Herein, the pre-crosslinking temperature is preferably 20 to 40°C.

The resultant is preferably stored at a temperature of 10 to 30°C for the period from completion of the pre-crosslinking to dip molding. If the resultant is stored at a high temperature, the tensile strength of the resulting dip molded article may be reduced.


Dip molded article

The dip molded article of the present invention is obtained by dip molding the latex composition of the present invention. Dip molding means a method including dipping a mold in the latex composition to deposit the composition on the surface of the mold, then lifting the mold from the composition, and thereafter drying the composition deposited on the surface of the mold. Herein, the mold before dipping in the latex composition may be pre-heated. A coagulating agent can be, if necessary, used before the mold is dipped in the latex composition or after the mold is lifted from the latex composition.

Specific example of the method of using the coagulating agent preferably include a method including dipping the mold before dipping in the latex composition, in a solution of the coagulating agent, to attach the coagulating agent to the mold (anode coagulation dipping method) and a method including dipping the mold on which the latex composition is deposited, in a coagulating agent solution (Teague coagulation dipping method), and an anode coagulation dipping method is preferable from the viewpoint that a dip molded article small in thickness variation is obtained.

Specific examples of the coagulating agent include water-soluble polyvalent metal salts, for example, metal halides such as barium chloride, calcium chloride, magnesium chloride, zinc chloride and aluminum chloride; nitrates such as barium nitrate, calcium nitrate and zinc nitrate; acetates such as barium acetate, calcium acetate and zinc acetate; and sulfates such as calcium sulfate, magnesium sulfate and aluminum sulfate. Among them, a calcium salt is preferable, and calcium nitrate is more preferable. Such water-soluble polyvalent metal salts can be used singly or in combinations of two or more kinds thereof.

The coagulating agent is preferably used in the form of an aqueous solution. The aqueous solution may further contain a water-soluble organic solvent such as methanol or ethanol, and/or a nonionic surfactant. The concentration of the coagulating agent varies depending on the type of the water-soluble polyvalent metal salt, and is preferably 5 to 50% by weight, more preferably 10 to 30% by weight.

After the mold is lifted from the latex composition, the deposit formed on the mold usually by heating is dried. The drying conditions may be appropriately selected.

Next, the deposit formed on the mold by heating is crosslinked.

While the heating conditions in crosslinking are not particularly limited, the heating temperature is preferably 60 to 150°C, more preferably 100 to 130°C, and the heating time is preferably 10 to 120 minutes.

Examples of the heating method include, but are not particularly limited, a method of heating by hot air in an oven and a method of heating by irradiation with infrared light.

In order to remove water-soluble impurities (for example, excessive surfactant and/or coagulating agent) before or after heating the mold on which the latex composition is deposited, the mold is preferably washed with water or warm water. The warm water used is preferably at 40°C to 80°C, more preferably at 50°C to 70°C.

The dip molded article after crosslinking is detached from the mold. Specific examples of the detaching method include a method for releasing the article from the mold by hand and a method for releasing the article by water pressure or compressed air pressure. When the dip molded article during crosslinking has a sufficient strength for detaching, the dip molded article may be detached during crosslinking and continuously subsequently crosslinked.

The dip molded article of the present invention is obtained by use of the latex composition obtained by the production method of the present invention, and thus is excellent in tensile strength and can be particularly suitably used as a glove. When the dip molded article is a glove, an inorganic fine particle of talc, calcium carbonate or the like, or an organic fine particle such as a starch particle may be spread on the glove surface, an elastomer layer containing a fine particle may be formed on the glove surface, or the surface layer of the glove may be chlorinated, in order to prevent adhesion on the contact surface of the dip molded article to thereby enhance slipping during detachment.

The dip molded article of the present invention can also be used in, other than the glove, medical products such as a nipple for baby bottles, a dropper, a tube, a water cushion, a balloon sack, a catheter and a condom; toys such as an air ball, a doll and a ball; industrial products such as a bag for pressure molding and a bag for gas storage; and a fingerstall.

Adhesive layer formation substrate

The adhesive layer formation substrate of the present invention is a composite material of a substrate provided with an adhesive layer formed by use of the polymer latex of the present invention on the substrate, and the adhesive layer.

The substrate is not particularly limited, and for example, a fiber substrate can be used. The type of a fiber constituting the fiber substrate is not particularly limited, and examples thereof include polyamide fibers such as a vinylon fiber, a polyester fiber, nylon, aramid (aromatic polyamide), a glass fiber, cotton, and rayon. These can be appropriately selected depending on the intended use. The shape of the fiber substrate is not particularly limited, examples thereof can include staple, filament, a cord shape, a rope shape, and a woven cloth (sailcloth and the like), and such shapes can be appropriately selected depending on the intended use.

The adhesive layer may be formed by use of the above-mentioned polymer latex of the present invention, and may be used as it is with no compounding agent or the like being compounded in the above-mentioned polymer latex of the present invention, or may be formed by use of an adhesive composition obtained by compounding various compounding agents.

Examples of the compounding agent contained in the adhesive composition include an adhesive resin. The adhesive resin is not particularly limited, and for example, any of a resorcin-formaldehyde resin, a melamine resin, an epoxy resin and an isocyanate resin can be suitably used and, among them, a resorcin-formaldehyde resin is preferable. A known resorcin-formaldehyde resin (for example, one disclosed in Japanese Patent Laid-Open No. 55-142635) can be used as the resorcin-formaldehyde resin. The reaction ratio of resorcin and formaldehyde is usually 1:1 to 1:5, preferably 1:1 to 1:3 in terms of the molar ratio "resorcin : formaldehyde".

The adhesive composition can also contain 2,6-bis(2,4-dihydroxyphenylmethyl)-4-chlorophenol or an analogue compound, isocyanate, block isocyanate, ethylene urea, polyepoxide, a modified vinyl chloride resin, and the like conventionally used, for a further enhancement in adhesion force.

The adhesive composition can further contain a vulcanization aid. A vulcanization aid can be contained, thereby enhancing the mechanical strength of the adhesive layer formation substrate. Examples of the vulcanization aid include quinone dioximes such as p-quinone dioxime; methacrylic acid esters such as lauryl methacrylate and methyl methacrylate; allyl compounds such as DAF (diallyl fumarate), DAP (diallyl phthalate), TAC (triallyl cyanurate) and TAIC (triallyl isocyanurate); maleimide compounds such as bismaleimide, phenylmaleimide and N,N-m-phenylenedimaleimide; and sulfur.

The content (solid content) of the synthetic rubber in the adhesive composition is preferably 5 to 60% by weight, more preferably 10 to 30% by weight.

The adhesive layer formation substrate of the present invention can be obtained by forming the adhesive layer on the substrate, according to, for example, a method for coating the substrate surface with the polymer latex of the present invention or an adhesive composition containing such a polymer latex, or a method for dipping the substrate in the polymer latex of the present invention or an adhesive composition containing such a polymer latex.

Such an adhesive layer formation substrate of the present invention can be, for example, bonded to rubber with the adhesive layer being interposed therebetween, and thus used as a substrate-rubber composite. Examples of the substrate-rubber composite include, but are not particularly limited, a rubber toothed belt including a core wire, in which a cord-shaped substrate is used as a fiber substrate, and a rubber toothed belt in which a foundation cloth-like fiber substrate such as a sail cloth is used.

Examples of the method for obtaining the substrate-rubber composite include, but are not particularly limited, a method including attaching the polymer latex of the present invention, or an adhesive composition containing the polymer latex to a substrate by a coating method, a dipping treatment or the like, to thereby obtain the adhesive layer formation substrate, disposing the adhesive layer formation substrate on rubber, and heating and pressurizing the resultant. Such pressurizing can be performed by use of a compression (press) molding machine, a metal roll, an injection molding machine or the like. The pressure in such pressurizing is preferably 0.5 to 20 MPa, more preferably 2 to 10 MPa. The temperature in such heating is preferably 130 to 300°C, more preferably 150 to 250°C. The treatment time for such heating and pressurizing is preferably 1 to 180 minutes, more preferably 5 to 120 minutes. Such a heating and pressurizing method enables molding of rubber and adhesion of the adhesive layer formation substrate and the rubber to be simultaneously performed. It is herein preferable to form a mold for providing a desired surface shape on the rubber of an objective substrate-rubber composite, on the inner surface and/or roll surface of a mold of a compression machine for use in such pressurizing.

One aspect of the substrate-rubber composite can include a substrate-rubber-substrate complex. The substrate-rubber-substrate complex can be formed by, for example, combining a substrate (which may be a complex of two or more substrates.) and the substrate-rubber composite. Specifically, the substrate-rubber-substrate complex can be obtained by stacking a core serving as the substrate, rubber, and a foundation cloth serving as the substrate (where the polymer latex of the present invention, or the adhesive composition containing the polymer latex is appropriately attached to the core and the foundation cloth to provide the adhesive layer formation substrate), and pressurizing the stacked product with heating.

The substrate-rubber composite obtained by use of the adhesive layer formation substrate of the present invention is excellent in mechanical strength, wear resistance and water resistance, and therefore can be suitably used for a belt such as a flat belt, a V-belt, a V-ribbed belt, a round belt, a square belt or a toothed belt. The substrate-rubber composite obtained by use of the adhesive layer formation substrate of the present invention is excellent in oil resistance and can also be suitably used for an oil immersed belt. Furthermore, the substrate-rubber composite obtained by use of the adhesive layer formation substrate of the present invention can also be suitably used for a hose, a tube, a diaphragm or the like. Examples of the hose include a single-tube rubber hose, a multilayer rubber hose, a knitted reinforced hose and a cloth-wrapped reinforced hose. Examples of the diaphragm include a flat diaphragm and a rolling type diaphragm.

The substrate-rubber composite obtained by use of the adhesive layer formation substrate of the present invention can be used for industrial products such as a seal and a rubber roll, in addition to the above applications. Examples of the seal include moving part seals such as rotary, rocking, and reciprocally moving seals, and fixing part seals. Examples of the moving part seal include an oil seal, a piston seal, a mechanical seal, boot, a dust cover, a diaphragm, and an accumulator. Examples of the fixing part seal include an O ring and various gaskets. Examples of the rubber roll include rolls as parts for OA equipment such as a printer and a copier; rolls for fiber processing, such as a stretching roll for spinning and a draft roll for spinning; and rolls for iron-making, such as a bridle roll, a snubber roll and a steering roll.

EXAMPLES

Hereinafter, the present invention will be more specifically described with reference to Examples and Comparative Examples, but the present invention is not intended to be limited to such Examples. Hereinafter, unless particularly noted, "part(s)" is on a weight basis. The test or evaluation methods of physical properties and characteristics are as follows.

Weight average molecular weight (Mw) and molecular weight distribution (Mw/Mn)

Dilution with tetrahydrofuran was made so that the solid content concentration of the synthetic polyisoprene or styrene-isoprene-styrene block copolymer included in the polymer solution was 0.1% by weight, and the solution was subjected to gel permeation chromatography analysis to calculate the weight average molecular weight (Mw) and the molecular weight distribution (Mw/Mn) in terms of standard polystyrene.

Solid content concentration

Two g of a sample was accurately weighed (weight: X2) in an aluminum dish (weight: X1), and dried at 105°C in a hot air drier for 2 hours. Next, the dried product was cooled in a desiccator and weighed together with the aluminum dish (weight: X3), and the solid content concentration was calculated according to the following calculation expression.

$$\text{Solid content concentration (\% by weight)} = (X3 - X1) \times 100/X2$$

Emulsification stability

The occurrence of separation and/or solidification of the emulsified liquid in emulsification was visually observed and evaluated according to the following criteria.

A: no problem was particularly confirmed and emulsification could be favorably performed.

B: the occurrence of separation or solidification was observed in the emulsified liquid, and emulsification could not be favorably performed.

Solvent removal stability

The stability (the occurrence of an aggregated article, or the like) while cyclohexane was distilled off from the emulsified liquid by distillation under reduced pressure was visually observed and evaluated according to the following criteria.

A: no problem was particularly confirmed and distillation under reduced pressure could be favorably performed.
B: the problem of floating of many aggregates in the surface layer of the emulsified liquid was caused, and distillation under reduced pressure could not be performed.

Centrifugation stability

The stability (the occurrence of coagulation of the synthetic polyisoprene or the styrene-isoprene-styrene block copolymer) while the emulsified liquid from which cyclohexane was removed was centrifuged was visually observed and evaluated according to the following criteria.

A: no coagulation was confirmed and centrifugation could be favorably performed.
B: while coagulation was slightly confirmed, centrifugation could be performed.
C: coagulation occurred and centrifugation could not be performed.

Mechanical stability

The mechanical stability was evaluated according to the method described in "Determination of Mechanical Stability" in ASTM D1417-10.
The mechanical stability was measured using MS-5114 (Ueshima Seisakusho Co., Ltd.) or LL5110NA MK3 (Source 2 trade Ltd). Herein, a stirring disc was used which had a diameter of 20.83 mm $\pm$ 0.03 mm and a thickness of 1.57 mm $\pm$ 0.05 mm, prescribed in ASTM D1076-10. As a glass beaker was used a glass beaker prescribed in ASTM D141710, in which the inner diameter was 57.8 mm $\pm$ 1 mm. Fifty g of the polymer latex was accurately weighed, and stirred under a condition of a number of rotations of 14,000 rpm for 30 minutes. The polymer latex after stirring was filtered through an 80-mesh wire cloth. Thereafter, the mesh was washed with soap water and the soap was washed off with distilled water, and thereafter the resultant was dried at 105°C for 2 hours. After the drying, the residue substance on the wire cloth was weighed, and the ratio (unit: % by weight) relative to 50 g of the polymer latex was calculated and the mechanical stability was evaluated based on the resulting value. As the value is smaller, the mechanical stability of the polymer latex is more excellent, and is preferably 2.0 or less.
Tensile strength, tensile elongation, and tensile stress at 500% of dip molded article
A film-shaped dip molded article having a thickness of about 0.2 mm was subjected to punching by a dumbbell (trade name "Super Dumbbell (Model: SDMK-100C)", manufactured by Dumbbell Co., Ltd.) based on ASTM D412 to produce a test piece for tensile strength measurement. The test piece was pulled by a Tensilon universal tester (trade name "RTG-1210", manufactured by ORIENTEC Co., LTD) at a tension rate of 500 mm/min to measure the tensile strength (unit: MPa) immediately before breakage, the elongation (unit: %) immediately before breakage and the tensile stress (unit: MPa) at an elongation rate of 500%.

Example 1

(Preparation of polymer solution of synthetic polyisoprene)

After 85 parts of cyclohexane was loaded into a tank, 15 parts of an isoprene polymer (PI) having a weight average molecular weight of 1,300,000 (trade name "Nipol IR 2200L", produced by Zeon Corporation, homopolymer of isoprene, amount of cis bond unit: 98%) was charged, and molten under stirring in the tank with the temperature being raised to 70°C, thereby preparing 100 parts of a polymer solution of the isoprene polymer. Herein, the solid content concentration of the resulting polymer solution was 15% by weight.

(Stirring step and aqueous phase removal step)

After 10 parts of distilled water was added to the polymer solution obtained above, the mixture was circulated by use of a stirring machine installed in the tank and a pulverizing pump (CP) as a shear mixing apparatus arranged outside the tank system at a temperature of 70°C for 1 hour and thus stirred, and thereafter left to stand for 30 minutes, thereby separating an aqueous phase as a lower layer, and the aqueous phase separated was removed to thereby obtain polymer solution (a-1) of a synthetic isoprene polymer. The amount of the aqueous phase here removed was 92% by weight based on the amount of distilled water added.

(Production of polymer latex)

First, 10 parts of sodium rosinate was mixed with water, to prepare aqueous anionic surfactant solution (b) having a concentration of 1.0% by weight.

(Emulsification step)

Next, polymer solution (a-1) of a synthetic isoprene polymer and aqueous anionic surfactant solution (b) were charged to a mixer (trade name "multiline mixer MS26-MMR-5.5L", manufactured by Satake Chemical Equipment Mfg., Ltd.) at a proportion such that the weight ratio was 1:1, mixed therein, and subsequently mixed and emulsified at 4100 rpm by use of a homogenizer (trade name "Milder MDN310", manufactured by Pacific Machinery & Engineering Co., Ltd.), thereby obtaining emulsified liquid (c-1). Herein, the emulsification stability while emulsification was performed was evaluated according to the above-mentioned method. The results are shown in Table 1.

(Solvent removal step)

Subsequently, emulsified liquid (c-1) was warmed to 80°C under a reduced pressure of -0.01 to -0.09 MPa (gauge pressure), and cyclohexane was distilled off to thereby provide emulsified liquid (d-1) (water dispersion liquid of synthetic isoprene polymer) from which cyclohexane was removed. Herein, the solvent removal stability during distillation off of cyclohexane was evaluated according to the above-mentioned method. The results are shown in Table 1.

(Concentration step)

Next, emulsified liquid (d-1) from which cyclohexane was removed was centrifuged by use of a continuous centrifuge at a centrifugal acceleration of 4,000 to 5,000 G, thereby obtaining, as a light liquid, polymer latex (e-1) having a solid content concentration of 66% by weight. Herein, the centrifugation stability during centrifugation was evaluated according to the above-mentioned method. In addition, the mechanical stability of polymer latex (e-1) obtained was measured according to the above-mentioned method. The results are shown in Table 1.

(Preparation of latex composition)

An aqueous sodium dibutyldithiocarbamate solution having a concentration of 5% by weight was added with synthetic polyisoprene polymer latex (e-1) obtained being stirred, thereby obtaining mixed liquid (f-1). Herein, the amount of the aqueous sodium dibutyldithiocarbamate solution added was as follows: 0.4 parts of sodium dibutyldithiocarbamate based on 100 parts of the synthetic polyisoprene.

Next, almost 100% of the carboxyl group in a styrene-maleic acid mono-sec-butyl ester-maleic acid monomethyl ester polymer (trade name "Scripset 550", produced by Hercules Inc.) was neutralized with sodium hydroxide, thereby preparing an aqueous sodium salt solution (concentration: 10% by weight) as dispersing agent (g). Dispersing agent (g) was added to mixed liquid (f-1) such that the solid content based on 100 parts of the synthetic polyisoprene was 0.6 parts, thereby obtaining mixed liquid (h-1).

While mixed liquid (h-1) obtained was stirred, 1.5 parts of zinc oxide, 1.5 parts of sulfur, 2 parts of an antioxidant (trade name: Wingstay L, manufactured by Goodyear Tire and Rubber Company), 0.35 parts of zinc diethyldithiocarbamate and 0.3 parts of a mercaptobenzothiazole zinc salt, in terms of the solid content, based on 100 parts of the synthetic polyisoprene in mixed liquid (h-1) were added in the form of water dispersion liquids of such respective compounding agents, and thereafter an aqueous potassium hydroxide solution was added to adjust the pH to 10.5, and distilled water was further added such that the solid content concentration was 40% by weight, thereby obtaining latex composition (i-1). Thereafter, latex composition (i-1) obtained was aged at 25°C for 96 hours.

(Production of dip molded article)

A glass mold (diameter: about 5 cm, length of frosted portion: about 15 cm) whose surface was subjected to frosting processing was washed, pre-heated in an oven at 70°C, thereafter dipped in an aqueous coagulating agent solution including 16% by weight of calcium nitrate and 0.05% by weight of polyoxyethylene lauryl ether (trade name "Emulgen 109P", produced by Kao Corporation) for 5 seconds, and then taken out.

Next, the glass mold covered with the coagulating agent was dried in an oven at 70°C. Thereafter, the glass mold covered with the coagulating agent was taken out from the oven, dipped in latex composition (i) at 25°C for 10 seconds and then taken out, and dried at room temperature for 60 minutes. The glass mold covered with a film was placed in an oven, heated from 50°C to 60°C over 25 minutes and pre-dried, and placed in an oven at 70°C for 10 minutes for further drying. The glass mold was dipped in warm water at 60°C for 2 minutes, and thereafter air dried at room temperature for 10 minutes. Thereafter, the glass mold covered with film-shaped synthetic polyisoprene was placed in an oven, and subjected to vulcanization at 100°C for 60 minutes. The glass mold covered with a film vulcanized was cooled to room temperature, talc was spread thereon, and thereafter the film was peeled off from the glass mold, to thereby obtain a dip molded article. The tensile strength, the tensile elongation, and the tensile stress at an elongation of 500% of the resulting dip molded article were measured according to the above-mentioned methods. The results are shown in Table 1.

Example 2

Polymer solution (a-2), polymer latex (e-2) and latex composition (i-2) were produced and evaluated in the same manner as in Example 1 except that the amount of distilled water added to the polymer solution in Example 1 was changed to 1 part. Herein, the amount of the aqueous phase removed in order to obtain polymer solution (a-2) was 90% by weight based on the amount of distilled water added. The solid content concentration of polymer latex (e-2) after centrifugation was 65% by weight. A dip molded article was then produced and evaluated in the same manner as in Example 1 except that latex composition (i-2) obtained was used. The results are shown in Table 1.

Example 3

Polymer solution (a-3), polymer latex (e-3) and latex composition (i-3) were produced and evaluated in the same manner as in Example 1 except that the temperature at which distilled water was added to the polymer solution and then stirred by the pulverizing pump (CP) in Example 1 was changed to 35°C. Herein, the amount of the aqueous phase removed for obtaining polymer solution (a-3) was 97% by weight based on the amount of distilled water added. The solid content concentration of polymer latex (e-3) after centrifugation was 66% by weight. A dip molded article was then produced and evaluated in the same manner as in Example 1 except that latex composition (i-3) obtained was used. The results are shown in Table 1.

Example 4

Polymer solution (a-4), polymer latex (e-4) and latex composition (i-4) were produced and evaluated in the same as in Example 3 except that a solution obtained by dissolving 0.015 parts of a chelating agent (EDTA) in 10 parts of distilled water based on 100 parts of the polymer solution of isoprene polymer and adjusting the pH to 3.5 by hydrochloric acid was added before stirring by the pulverizing pump (CP) in Example 3. Herein, the amount of the aqueous phase removed for obtaining polymer solution (a-4) was 93% by weight based on the amount of distilled water added. The solid content concentration of polymer latex (e-4) after centrifugation was 67% by weight. A dip molded article was then produced and evaluated in the same manner as in Example 1 except that latex composition (i-4) obtained was used. The results are shown in Table 1.

Example 5

Polymer solution (a-5), polymer latex (e-5) and latex composition (i-5) were produced and evaluated in the same as in Example 3 except that the polymer solution was not stirred by use of the pulverizing pump (CP), but stirred by only the stirring machine installed in the tank, for 3 hours, in Example 3. Herein, the amount of the aqueous phase removed for obtaining polymer solution (a-5) was 91% by weight based on the amount of distilled water added. The solid content concentration of polymer latex (e-5) after centrifugation was 65% by weight. A dip molded article was then produced and evaluated in the same manner as in Example 1 except that latex composition (i-5) obtained was used. The results are shown in Table 1.

Example 6

Polymer solution (a-6) of a styrene-isoprene-styrene block copolymer, polymer latex (e-6) and latex composition (i-6) were produced and evaluated in the same manner as in Example 1 except that not only 30 parts of a styrene-isoprene-styrene block copolymer (SIS) (trade name "Quintac 3620", produced by Zeon Corporation) was used instead of the isoprene polymer (PI), but also the amount of cyclohexane was changed to 70 parts, in Example 1. Herein, the amount of the aqueous phase removed for obtaining polymer solution (a-6) was 92% by weight based on the amount of distilled water added. The solid content concentration of polymer latex (e-6) after centrifugation was 65% by weight. A dip molded article was then produced and evaluated in the same manner as in Example 1 except that latex composition (i-6) obtained was used. The results are shown in Table 1.

Comparative Example 1

Polymer solution (a-7) of a synthetic isoprene polymer and emulsified liquid (d-7) from which cyclohexane was removed were produced and evaluated in the same manner as in Example 1 except that addition of distilled water, stirring and removal of the aqueous phase were not performed in the polymer solution of a synthetic isoprene polymer in Example 1. In Comparative Example 1, when emulsified liquid (d-7) from which cyclohexane was removed was centrifuged, the solid content in emulsified liquid (d-7) from which cyclohexane was removed was coagulated and no polymer latex could be obtained. Therefore, in Comparative Example 1, production of a dip molded article by use of a polymer latex, and evaluation of a dip molded article could not be performed. The results are shown in Table 1.

Comparative Example 2

Polymer solution (a-8) and emulsified liquid (d-8) from which cyclohexane was removed were produced and evaluated in the same manner as in Example 1 except that removal of the aqueous phase was not performed after addition of distilled water to the polymer solution and stirring by the pulverizing pump (CP), in Example 1. In Comparative Example 2, when emulsified liquid (d-8) from which cyclohexane was removed was centrifuged, the solid content in emulsified liquid (d-8) from which cyclohexane was removed was coagulated and no polymer latex could be obtained. Therefore, in Comparative Example 1, production of a dip molded article by use of a polymer latex, and evaluation of a dip molded article could not be performed. The results are shown in Table 1.

Comparative Example 3

Polymer solution (a-9), polymer latex (e-9) and latex composition (i-9) were produced and evaluated in the same manner as in Example 1 except that emulsified liquid (d-9) from which cyclohexane was removed was produced without removal of the aqueous phase after addition of distilled water to the polymer solution and stirring by the pulverizing pump (CP), and the centrifugal acceleration in centrifugation of emulsified liquid (d-9) from which cyclohexane was removed was changed to 2,000 to 3,000 G, in Example 1. Herein, the solid content concentration of polymer latex (e-9) after centrifugation was 56% by weight. A dip molded article was then produced and evaluated in the same manner as in Example 1 except that latex composition (i-9) obtained was used. The results are shown in Table 1.

[Table 1]

Table 1

| | Rubber component of polymer solution | Stirring step/aqueous phase removal step | | | | | | Stability of step | | | | Physical properties | | | | |
|---|---|---|---|---|---|---|---|---|---|---|---|---|---|---|---|---|
| | | Amount of distilled water (parts by weight) | EDTA (parts by weight) | Stirring method | Treatment temperature (°C) | Treatment time (hr) | Removal rate of aqueous layer (% by weight) | Emulsification stability | Solvent removal stability | Centrifugation | | Solid content concentration (% by weight) | Mechanical stability (% by weight) | Tensile strength MPa (MPa) | Tensile elongation (%) | Tensile stress at 500% (MPa) |
| | | | | | | | | | | Centrifugal acceleration (G) | Stability | | | | | |
| Example 1 | PI | 10 | --- | CP | 70 | 1 | 92 | A | A | 4,000 to 5,000 | A | 66 | <0.01 | 27 | 1020 | 1.8 |
| Example 2 | PI | 1 | --- | CP | 70 | 1 | 90 | A | A | 4,000 to 5,000 | A | 65 | 0.04 | 25 | 980 | 1.7 |
| Example 3 | PI | 10 | --- | CP | 35 | 1 | 97 | A | A | 4,000 to 5,000 | A | 66 | 0.12 | 24 | 1050 | 1.7 |
| Example 4 | PI | 10 | 0.015 | CP | 35 | 1 | 93 | A | A | 4,000 to 5,000 | A | 67 | 0.01 | 26 | 1000 | 1.7 |
| Example 5 | PI | 10 | --- | AG | 70 | 3 | 91 | A | A | 4,000 to 5,000 | A | 65 | 0.05 | 25 | 1000 | 1.7 |
| Example 6 | SIS | 10 | --- | CP | 70 | 1 | 92 | A | A | 4,000 to 5,000 | A | 65 | 0.01 | 23 | 1120 | 1.3 |
| Comparative Example 1 | PI | --- | --- | --- | --- | --- | --- | A | A | 4,000 to 5,000 | C | Unmeasurable | | | | |
| Comparative Example 2 | PI | 10 | --- | CP | 70 | 1 | 0 | A | A | 4,000 to 5,000 | C | Unmeasurable | | | | |
| Comparative Example 3 | PI | 10 | --- | CP | 70 | 1 | 0 | A | A | 2,000 to 3,000 | B | 56 | >0.2 | 19 | 990 | 1.9 |

In Table 1, "CP" means stirring by use of the pulverizing pump, and "AG" means stirring by only the stirring machine installed in the tank.

From Table 1, the polymer latex obtained by mixing the polymer solution of synthetic polyisoprene or a styrene-isoprene-styrene block copolymer with water and stirring the mixture, and thereafter removing the aqueous phase and also removing the organic solvent was excellent in productivities (emulsification stability, solvent removal stability and centrifugation stability) and mechanical stability, and furthermore the dip molded article obtained by use of such a polymer latex was excellent in tensile strength, tensile elongation and tensile stress (Examples 1 to 6) .

On the other hand, when no water was added to the polymer solution of synthetic polyisoprene (namely, neither stirring nor removal of the aqueous phase after addition of water was performed), the solid content of the polymer solution was coagulated in centrifugation after emulsification and distillation of the organic solvent under reduced pressure, and no polymer latex could be obtained (Comparative Example 1).

Similarly, even if water was added to the polymer solution of synthetic polyisoprene and the mixture was stirred, the solid content was coagulated in the centrifugation when no removal of the aqueous phase was performed, and no polymer latex could be obtained (Comparative Example 2).

Also when no removal of the aqueous phase was performed after water was added to the polymer solution of synthetic polyisoprene and the mixture was stirred, the centrifugal acceleration in the centrifugation could be as low as 2,000 to 3,000 G to thereby allow a polymer latex to be obtained, but the polymer latex obtained was inferior in mechanical stability and furthermore the dip molded article obtained by use of the polymer latex was inferior in tensile strength (Comparative Example 3).

**Claims**

1. A method for producing a polymer latex, comprising:

   a stirring step of adding water to a polymer solution obtained by dissolution of a synthetic rubber in an organic solvent, to allow water to be stirred in the polymer solution, thereby providing a water-stirred polymer solution (A);
   an aqueous phase removal step of removing an aqueous phase from the water-stirred polymer solution (A), thereby providing an aqueous phase-removed polymer solution (B);
   an emulsification step of mixing the aqueous phase-removed polymer solution (B) with an aqueous solution comprising a surfactant, for emulsification in water, thereby obtaining an emulsified liquid (C);
   a solvent removal step of removing an organic solvent in the emulsified liquid (C); and
   a concentration step of concentrating the emulsified liquid from which the organic solvent is removed (D).

2. The method for producing a polymer latex according to claim 1, wherein stirring of water in the polymer solution in the stirring step is performed in the state of a chelating agent and/or an oxidant being added.

3. The method for producing a polymer latex according to claim 1 or 2, wherein stirring of water in the polymer solution in the stirring step is performed with a shear force being applied.

4. The method for producing a polymer latex according to any of claims 1 to 3, wherein an amount of water used in the stirring step is 0.1 to 100 parts by weight based on 100 parts by weight of the polymer solution.

5. The method for producing a polymer latex according to any of claims 1 to 4, wherein stirring of water in the polymer solution in the stirring step is performed under a condition of a temperature of 25 to 100°C.

6. The method for producing a polymer latex according to any of claims 1 to 5, wherein the synthetic rubber is synthetic polyisoprene and/or a styrene-isoprene-styrene block copolymer.

7. The method for producing a polymer latex according to claim 6, wherein the polymer solution is a polymer solution obtained by dissolution, in an organic solvent, of the synthetic polyisoprene obtained by solution polymerization of a monomer comprising isoprene dissolved in an organic solvent, in the presence of a Ziegler type polymerization catalyst, and/or the styrene-isoprene-styrene block copolymer obtained by solution polymerization of a styrene-containing monomer and an isoprene-containing monomer dissolved in an organic solvent, in the presence of a Ziegler type polymerization catalyst.

8. A method for producing a latex composition, comprising a step of adding a crosslinking agent to a polymer latex obtained by the method according to any of claims 1 to 7.

9. A method for producing a dip molded article, comprising a step of dip molding a latex composition obtained by the method according to claim 8.

10. A method for producing an adhesive layer formation substrate, comprising a step of forming an adhesive layer formed by use of a polymer latex obtained by the method according to any of claims 1 to 7, on a substrate surface.

## INTERNATIONAL SEARCH REPORT

| International application No. |
|---|
| PCT/JP2017/009471 |

### A. CLASSIFICATION OF SUBJECT MATTER
*C08C2/04*(2006.01)i, *C08C1/00*(2006.01)i, *C08C3/00*(2006.01)i, *C08F6/08*
(2006.01)i, *C08J3/07*(2006.01)i, *C08L21/00*(2006.01)i

According to International Patent Classification (IPC) or to both national classification and IPC

### B. FIELDS SEARCHED

Minimum documentation searched (classification system followed by classification symbols)
C08C2/04, C08C1/00, C08C3/00, C08F6/08, C08J3/07, C08L21/00

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2015-193685 A  (Nippon Zeon Co., Ltd.), 05 November 2015 (05.11.2015), claims; paragraphs [0001], [0015] to [0017], [0024], [0020] to [0046], [0065] to [0070], [0077] to [0084], [0092] to [0097] (Family: none) | 1-10 |
| Y | JP 2012-62487 A  (Nippon Zeon Co., Ltd.), 29 March 2012 (29.03.2012), claims; paragraphs [0001] to [0006], [0018] to [0089] & US 2015/0087761 A1 claims; paragraphs [0001] to [0007], [0019] to [0189] & WO 2013/099501 A1   & EP 2799483 A1 & TW 201336935 A | 1-10 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 22 May 2017 (22.05.17) | 06 June 2017 (06.06.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

# EP 3 431 510 A1

| INTERNATIONAL SEARCH REPORT | International application No. |
|---|---|
| | PCT/JP2017/009471 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2013/161890 A1 (Asahi Kasei Chemicals Corp.), 31 October 2013 (31.10.2013), claims; paragraphs [0001] to [0007], [0012], [0017], [0020] to [0081] & US 2015/0112027 A1 claims; paragraphs [0001] to [0007], [0016], [0019], [0041] to [0116] & EP 2842973 A1 & CN 104245752 A & KR 10-2014-0131383 A & TW 201350510 A | 1-10 |
| Y | JP 2014-210866 A (Ube Industries, Ltd.), 13 November 2014 (13.11.2014), claims; paragraphs [0001] to [0003], [0008], [0014] to [0056] (Family: none) | 1-10 |
| Y | JP 6-136034 A (Asahi Chemical Industry Co., Ltd.), 17 May 1994 (17.05.1994), claims; paragraphs [0001] to [0048] (Family: none) | 1-10 |
| Y | JP 2012-46750 A (Rhein Chemie Rheinau GmbH), 08 March 2012 (08.03.2012), claims; paragraph [0003] & US 2012/0071595 A1 claims; paragraph [0003] & EP 2423185 A1 & CA 2750981 A & CN 102432932 A & MX 2011008991 A & KR 10-2012-0021233 A & TW 201219522 A & RU 2011135870 A | 10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012062487 A
- JP 55142635 A